# FASCICULE DE BREVET EUROPEEN

(11) **EP 0 682 863 B1**
(45) Date de publication et mention de la délivrance du brevet: **01.10.1997**
(21) Numéro de dépôt: 95401148.2
(22) Date de dépôt: 17.05.1995
(51) Int. Cl.: A01K 61/00

(54) **Dispositif d'élevage de mollusques, nottament d'huîtres**
Vorrichtung zum Züchten von Muscheln, insbesondere von Austern
Device for the culture of molluses, in particular of oysters

(30) Priorité: 18.05.1994 FR 9406157
(43) Date de publication de la demande: 22.11.1995
(73) Titulaire: GRAINOCEAN, F-17410 Saint Martin de Re (FR)
(72) Inventeur: Marissal, Eric, F-17410 Saint Martin de Re (FR)
(74) Mandataire: Lanceplaine, Jean-Claude

(56) Documents cités:
- GB-A- 2 242 811
- US-A- 4 377 987

## Description

La présente invention a pour objet un dispositif d'élevage en pleine mer de mollusques et notamment d'huîtres.

L'élevage d'huîtres ou ostréiculture, tel que connu depuis longtemps consiste à capter dans le milieu naturel des larves provenant de la ponte de géniteurs, qui se fixent sur des supports ou collecteurs agencés dans les zones propices par les ostréiculteurs.

Les huîtres, lorsqu'elles ont atteint une taille suffisante sont séparées des collecteurs et sont replacées ou semées dans le milieu naturel pour qu'elles puissent y grossir jusqu'à avoir une taille permettant leur commercialisation.

Afin de pouvoir semer et récolter les huîtres, pendant de nombreuses années, les huîtres ont été semées sur parc c'est à dire des emplacements découvrant à marée basse.

Un tel élevage nécessite de nombreux travaux pénibles et a un aspect artisanal, le rendement n'étant pas élevé du fait de ces nombreux travaux manuels nécessaires et d'un accès limité dans le temps aux parcs.

Dans certaines régions, les huîtres sont semées dans des emplacements ne découvrant pas à marée basse et la récolte est effectuée à l'aide d'une drague.

Une telle méthode ne permet pas de surveiller l'évolution des huîtres.

Dans des années récentes, s'est développée une méthode beaucoup plus industrielle, par exemple au niveau du captage de larves qui est faite dans ce que l'on appelle des écloseries. Ces larves sont ensuite traitées et suivies de manière scientifique jusqu'à ce qu'elles atteignent une taille suffisante pour être remises dans le milieu naturel.

Dans cette dernière étape, les huîtres ne sont plus semées mais disposées sur des plateaux circulaires agencés à l'intérieur d'un filet en forme de tube, les plateaux étant régulièrement espacés verticalement, constituant ainsi ce que l'on appelle couramment une lanterne japonaise, l'ensemble ayant la forme d'un tel objet, comme décrit dans le brevet US-A-4 377 987.

Les lanternes japonaises sont suspendues en étant écartées les unes des autres à une haussière amarrées en eau profonde et munie de flotteurs.

De telles lanternes japonaises ont une hauteur globale d'environ 5 mètres et leur installation nécessite l'utilisation d'un bateau relativement important muni d'un élément de mise en oeuvre et de levage tel qu'une grue par exemple.

Les plateaux actuellement connus sont des plateaux circulaires dont la partie centrale est ajourée et munie de raidisseurs.

A l'extérieur de la partie centrale s'étend un bord annulaire dont la périphérie comporte des parties analogues à la pointe d'une flèche, régulièrement espacées, les parties de liaison entre deux pointes étant constituées d'une gorge cylindrique perpendiculaire au plan du plateau et ouverte vers l'extérieur entre deux pointes adjacentes pour recevoir un fil du filet.

De plus, à l'extrémité radiale de chaque pointe est agencé un picot s'étendant vers le bas perpendiculairement au plan du plateau, de manière à pouvoir retenir radialement un fil du filet qui de manière générale est pratiquement perpendiculaire au fil retenu dans la gorge citée précédemment.

Le bord annulaire comporte trois trous traversant perpendiculaires au plan du plateau et régulièrement espacés.

On va maintenant décrire la réalisation d'une lanterne japonaise à l'aide d'un tel plateau, selon la technique antérieure, ce qui permettra d'expliquer les inconvénients relatifs au plateau.

Dans une première phase, les plateaux sont agencés le long de trois filins qui passent au travers des trous du bord annulaire, en étant écartés par des moyens quelconques de retenue, par exemple des noeuds, de manière régulière le long des filins.

Les plateaux sont empilés les uns au-dessus des autres dans un manchon métallique, les filins étant pliés entre les plateaux, leurs extrémités supérieurs étant fixées à un crochet de levage.

Dans une seconde phase le filet en forme de tube est plié en accordéon autour du manchon métallique, trois câbles étant fixés à 120° par exemple au niveau de la circonférence supérieure ouverte du filet et réunis au niveau du crochet de levage cité ci-dessus.

Ceci étant réalisé, le crochet de levage est levé d'environ 15 à 20 centimètres, ce qui correspond à l'espacement entre deux plateaux lorsque les parties de câbles situées entre ceux-ci sont tendues, ce qui amène la partie supérieure du filet à s'étendre au-dessus du manchon, ainsi que le plateau supérieur. Dans cette position, le plateau supérieur est accroché à l'intérieur du filet par l'intermédiaire des picots et des gorges.

L'opération est répétée jusqu'à ce que tous les plateaux soient accrochés à l'intérieur du filet en forme de tube, après quoi l'extrémité inférieure du filet est regroupée en dessous du plateau le plus bas et munie d'un lest.

Des lanternes ainsi réalisées sont accrochées à une haussière destinée à être larguée en mer comme cela est bien connu, les lanternes étant écartées l'une de l'autre de manière régulière.

On a constaté qu'en réalisant une lanterne à l'aide de plateaux connus tel que décrit ci-dessus, le plateau n'est pas toujours horizontal, l'accrochage au filet n'étant pas réalisé de manière sûre.

Une modification manuelle de l'accrochage peut être nécessaire, ce qui prend du temps et est coûteux, et n'aboutit pas toujours à une horizontalité suffisante de sorte que les jeunes huîtres s'entassent sur un secteur du plateau et ne peuvent grossir comme prévu, ce qui diminue fortement le rendement.

De plus, les lanternes japonaises se balancent dans l'eau sous l'effet des courants et lorsqu'elles sont trop proches l'une de l'autre, un plateau d'une lanterne peut s'accrocher par l'intermédiaire des picots au filet d'une lanterne adjacente. Dans ce cas, cela entraîne le déchirement des filets et donc une perte importante du produit en cours de croissance, ce qui, une fois encore, diminue le rendement.

Pour éviter ce dernier inconvénient, les lanternes, ayant une hauteur efficace de 3 mètres environ sont espacées d'au moins 2 mètres sur la haussière.

Pour remédier à ces inconvénients, la présente invention à pour but de fournir un dispositif d'élevage de mollusques comportant au moins un élément formant plateau dont la mise en place correcte soit facile et prenne moins de temps et qui ne puisse pas s'accrocher à une lanterne voisine, ce qui permet d'agencer de manière plus serrée les lanternes sur une haussière, c'est à dire d'avoir un plus grand nombre de lanternes pour une même longueur de haussière, aboutissant ainsi à un rendement nettement plus élevé.

A cet effet, la présente invention a pour objet un dispositif d'élevage de mollusques, notamment d'huîtres, comportant au moins un élément formant plateau de support desdits mollusques et disposé à l'intérieur d'un filet ayant une forme de tube et destiné à être suspendu à une haussière amarrée en mer, caractérisé en ce que l'élément formant plateau comporte à sa périphérie un rebord s'étendant de manière générale perpendiculairement au plan du plateau, et en ce qu'il comporte un élément séparé de serrage du filet contre le rebord.

Selon d'autres caractéristiques :
- le rebord s'étend de part et d'autre du plan du plateau,
- le rebord s'étend d'un côté du plan du plateau,
- le plateau est circulaire et le rebord à une face radialement extérieure cylindrique, l'élément de serrage étant un élément annulaire plat,
- le plateau est circulaire et le rebord a une face radialement extérieure délimitant une cavité annulaire, l'élément de serrage ayant une forme complémentaire de ladite cavité,
- le plateau est circulaire et le rebord a une face radialement extérieure comportant une partie en relief, l'élément de serrage ayant une forme complémentaire,
- la partie centrale du plateau est ajourée,
- l'élément séparé est constitué d'une corde serrant le filet à l'intérieur de la cavité annulaire, les extrémités de la corde étant réunies par une attache rapide reçue à l'intérieur de la cavité,
- l'attache rapide est constituée de deux demi-coquilles articulées ayant en position active réunie une forme extérieure complémentaire de la cavité annulaire et délimitant deux gorges parallèles dont une première comporte des éléments de blocage d'une première extrémité de la corde, l'autre gorge comportant des éléments permettant à la seconde extrémité de la corde de coulisser dans la gorge uniquement dans la direction de serrage de la corde dans la cavité annulaire, les coquilles comportant des moyens d'encliquetage mutuel en position active,
- l'attache rapide est constituée de deux demi-coquilles articulées ayant en position active réunie une forme extérieure complémentaire de la cavité annulaire et délimitant deux gorges parallèles comportant chacune des éléments permettant aux extrémités de la corde de coulisser dans la gorge associée dans une direction uniquement, les directions de coulissement dans les deux gorges étant opposées l'une à l'autre.
- l'élément formant plateau comporte un bord annulaire muni de trous de fixation sur un filin respectif, des éléments de fixation du filin étant agencés dans chacun des trous respectifs,
- les trous ont un profil tronconique d'axe perpendiculaire au plateau, l'élément de fixation étant constitué de deux demi-coquilles articulées qui, en position réunie, forment un tronc de cône complémentaire des trous, la partie d'extrémité rétrécie des coquilles comportant une collerette d'encliquetage à travers l'un des trous respectifs, les coquilles délimitant une gorge axiale de diamètre adapté au filin et munie de picots de blocage de ce dernier.

On va maintenant décrire la présente invention, à titre d'exemple uniquement, et en référence aux dessins annexés sur lesquels :
- la figure 1 représente de manière schématique une haussière amarrée en mer et munie de dispositifs d'élevage selon l'invention,
- la figure 2 est une vue de dessus d'un premier mode de réalisation d'un élément formant plateau du dispositif selon l'invention,
- la figure 3 est une vue en coupe selon la ligne III-III de l'élément formant plateau représenté sur la figure 2,
- la figure 4 est une vue partielle en coupe représentant une variante de mode de réalisation du rebord de l'élément formant plateau,
- la figure 5 est une vue partielle en coupe représentant schématiquement l'élément formant plateau et l'élément séparé de serrage associé à ce dernier pour coopérer de manière à serrer un filet entre eux, et
- les figures 6 à 15 représentent diverses variantes de mode de réalisation d'élément formant plateau et d'élément de serrage complémentaire selon la présente invention,
- les figures 16 et 17 représentent un élément de fixation d'un filin dans des trous de fixation de l'élément formant plateau,
- les figures 18 à 20 représentent un mode de serrage d'une corde à l'intérieur d'une cavité annulaire circonférentielle de l'élément formant plateau.

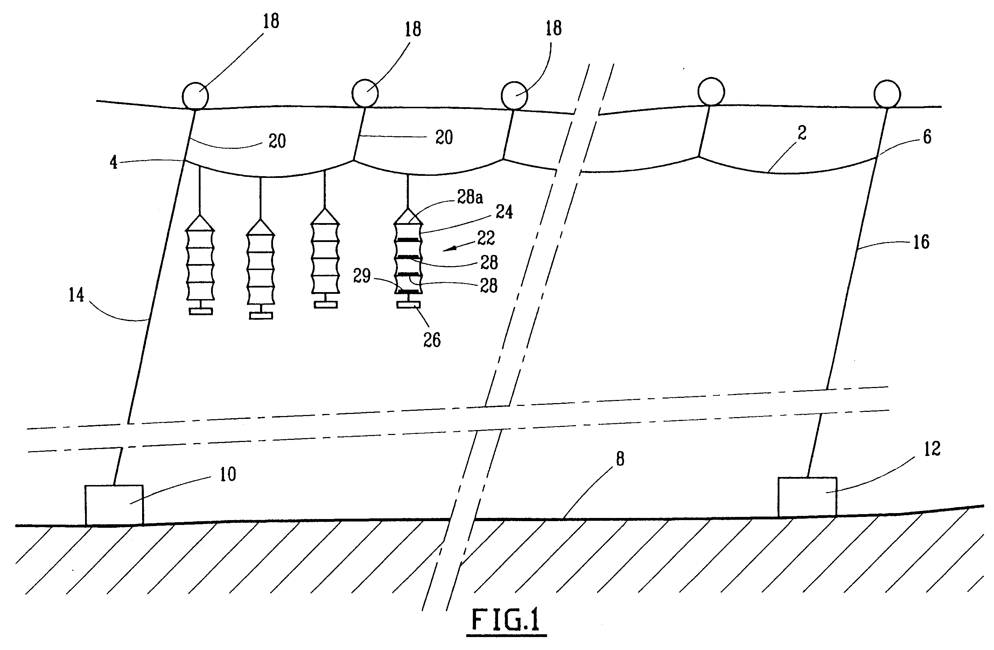

La figure 1 est une vue représentant schématiquement les éléments nécessaires pour l'élevage d'huîtres en pleine mer, selon la présente invention ou la technique antérieure.

Ces éléments comportent une haussière 2 dont les extrémités 4 et 6 sont amarrées sur le fond 8 de la mer à l'aide de gueuses 10 et 12 reliées par des câbles 14 et 16 aux extrémités 4 et 6 respectivement.

Ces câbles 14 et 16 ont par exemple une longueur d'environ 30 mètres.

La haussière 2 a une longueur d'environ 100 mètres.

A intervalle régulier d'environ 6 mètres, ainsi qu'aux extrémités 4 et 6 sont agencées des bouées 18 reliées à la haussière 2 par l'intermédiaire de cordes 20 dont la longueur est approximativement de 1 mètre, de manière à maintenir la haussière à une profondeur d'environ 1 mètre et à peu près parallèlement au fond 8 de la mer.

Des lanternes japonaises 22 sont suspendues sous la haussière en étant régulièrement espacées le long de celle-ci.

Une lanterne japonaise est constituée d'un filet 24 en forme de tube s'étendant à peu près verticalement en l'absence de courant important, chaque filet étant relié à sa partie inférieure à un lest 26.

Des ensembles formant plateau 28 coopèrent avec le filet 24 pour constituer des supports régulièrement répartis le long de l'axe de ce dernier et s'étendant perpendiculairement à celui-ci, sur lesquels des huîtres 29 sont disposées.

Il est à noter qu'un premier plateau 28a est agencé au niveau de l'extrémité supérieure ouverte du filet 24 et ne supporte pas huîtres.

Dans cette conception, les huîtres sont contenues dans des espaces fermés empêchant l'accès aux prédateurs.

Comme cité ci-dessus, dans la technique antérieure les lanternes japonaises 22 sont écartées d'environ 2 mètres, comme représenté sur la figure 1.

Comme cela apparaîtra de la description qui va suivre, l'utilisation d'ensembles formant plateaux selon la présente invention permet d'agencer les lanternes japonaises selon un écartement de 1 mètre uniquement, sans risque d'accrochage du filet d'une lanterne avec celui de la lanterne adjacente.

On a représenté sur les figures 2 à 6 un premier mode de réalisation d'un ensemble formant plateau selon la présente invention, ainsi que d'une variante.

On notera que sur l'ensemble des figures, les éléments analogues, tels que filets, haussière, autre que l'ensemble formant plateau selon la présente invention, et...portent la même référence numérique.

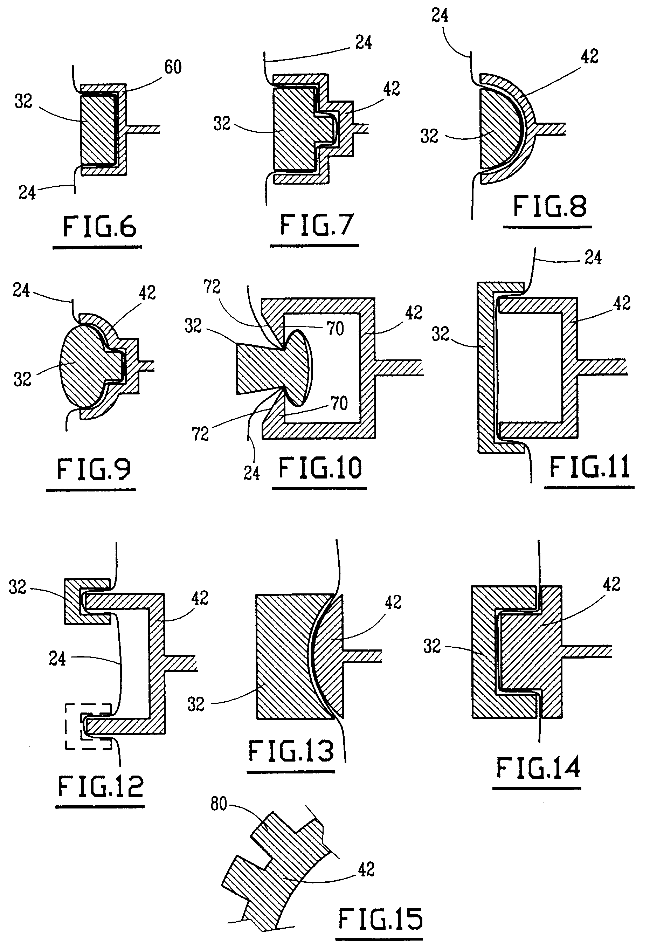

L'ensemble formant plateau selon la présente invention comporte un élément 30 formant plateau (voir figures 2 à 4) et un élément séparé 32 de serrage (voir figure 5).

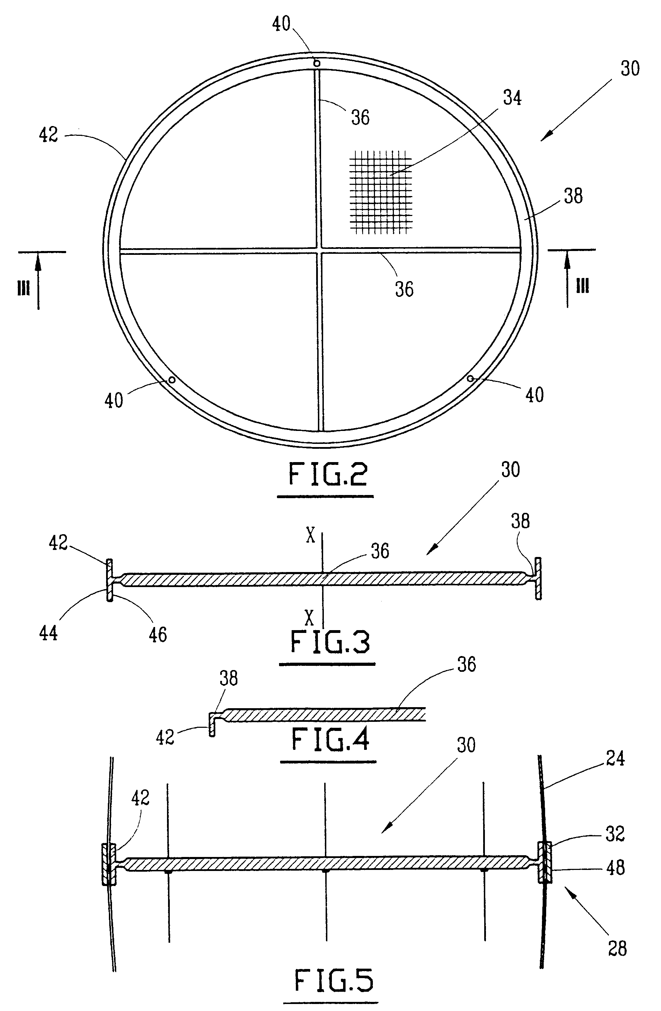

Sur la figure 2, l'élément 30 formant plateau selon la présente invention comporte une partie centrale circulaire ajourée 34 formant support, représentée partiellement sur la figure 2 et munie de raidisseurs plus épais 36 (voir également figure 3).

Un bord annulaire 38 s'étend à la périphérie de la partie centrale 34, dans le plan général du plateau 30.

Le bord annulaire 38 comporte trois trous traversants 40 angulairement espacés d'environ 120° autour de l'axe X-X de l'élément 30 formant plateau (voir figure 2).

Selon la présente invention, au niveau de la périphérie radialement extérieure du bord annulaire 38 est agencé un rebord ou une jante 42 s'étendant de part et d'autre du plan général de l'élément 30 formant plateau (voir figure 3).

La jante 42 comporte une face extérieure cylindrique 44 d'axe X-X et une face intérieure 46 reliée au bord annulaire 38.

L'ensemble sera de préférence réalisé en matière plastique venue de moulage.

En variante, la jante 42 peut s'étendre sur un côté seulement du plan général du bord annulaire 38, comme représenté sur la figure 4.

L'agencement de l'élément 30 formant plateau à l'intérieur du filet 24 en forme de tube s'effectue selon les mêmes principes que déjà décrits ci-dessus, à l'exception du fait qu'au lieu d'être accroché à l'aide de picots, après extraction du filet et d'un plateau à partir du manchon métallique mentionné précédemment, l'élément séparé de serrage 32 (voir figure 5) est agencé en vis-à-vis de la jante 42, à l'extérieur du filet 24 et serre ce dernier et le maintient en position contre la face extérieure 44 de la jante 42.

A cet effet, l'élément séparé de serrage 32 dans le mode de réalisation représenté sur la figure 5 est constitué d'une bande métallique plate, ou en matière plastique, munie d'un dispositif de serrage et de fixation en position connu en soi et non représenté.

En variante, l'élément 32 peut être un collier en matière plastique tel qu'utilisé pour la réunion de câble ou même un simple élastique plat de dimension et de résistance adaptées.

La face radialement extérieure 48 de l'élément 32 sera pratiquement lisse pour ne pas accrocher, en position en pleine mer, le filet d'une lanterne adjacente. Les angles de l'élément séparé de serrage 32 peuvent être arrondis pour améliorer une telle caractéristique.

Ceci permet d'avoir un écartement de 1 mètre entre deux lanternes adjacentes, ce qui accroît la productivité par rapport à la technique antérieure.

En outre, un tel élément 32 a l'avantage de pouvoir être installé très rapidement sans difficultés, ce qui est un avantage important du fait que cette tache est accomplie sur un bateau soumis aux vagues et aux courants.

La jante 42 et l'élément 32 séparé de serrage complémentaire selon la présente invention peuvent être conçus de manière différente.

Les figures 6 à 12 représentent des variantes de réalisation de la jante 42 et de l'élément 32 complémentaire dont la caractéristique commune est que la face radialement extérieure de la jante 42 délimite une cavité circonférentielle dans laquelle peut être inséré l'élément complémentaire 32, pour coincer le filet 24 à l'intérieur de la cavité, ce dernier étant représenté par un trait fin pour des raisons de simplification.

Sur la figure 6, la cavité 60 de la jante 42 a en coupe dans un plan diamétral du plateau une forme rectangulaire et l'élément 32 est constitué d'un jonc muni de moyens de serrage connus et non représentés. Ce jonc a une section complémentaire à la section de la cavité, c'est à dire rectangulaire.

Sur la figure 7, la cavité est prolongée vers l'axe du plateau par une cavité plus petite, l'élément 32 ayant une forme adaptée complémentaire. Cet ensemble fournit un trajet plus sinueux pour le filet 24.

Sur la figure 8, on constate que la cavité a une forme semi-torique, l'élément 32 ayant une forme complémentaire.

Sur la figure 9, la cavité est semi-torique de forme non circulaire mais ovoïdale, et est prolongée d'une cavité ayant en coupe diamétrale une forme rectangulaire, l'élément de serrage 32 ayant au niveau de sa face radialement intérieure une forme complémentaire à la cavité.

Sur la figure 10 on a représenté une cavité ayant une section diamétrale rectangulaire dont les extrémités libres sont munies de rebords 70 circonférentiels ayant une face radialement extérieure incliné vers l'intérieur de la cavité, l'élément complémentaire de serrage 32 étant réalisé en matière élastique. L'élément complémentaire 32 comporte une partie radialement intérieure destinée à venir s'encliqueter dans la cavité à travers l'ouverture délimitée par les rebords 70, la partie radialement extérieure pouvant être conique.

Sur les figures 11 et 12 on a représenté des éléments complémentaires de serrage 32 pouvant serrer et maintenir en position le filet 24 au niveau respectivement des deux bords ou d'un bord d'une cavité rectangulaire ouverte au niveau de sa face radialement extérieure.

Sur les figures 13 et 14, on a représenté deux variantes de jante 42 dont la caractéristique commune est que la jante 42 délimite une partie faisant saillie radialement vers l'extérieur, l'élément complémentaire de serrage 32 ayant une forme complémentaire destinée à entourer ladite saillie.

Sur les figures 13, la saillie a un profil en courbe alors que sur la figure 14 la saillie a un profil rectangulaire.

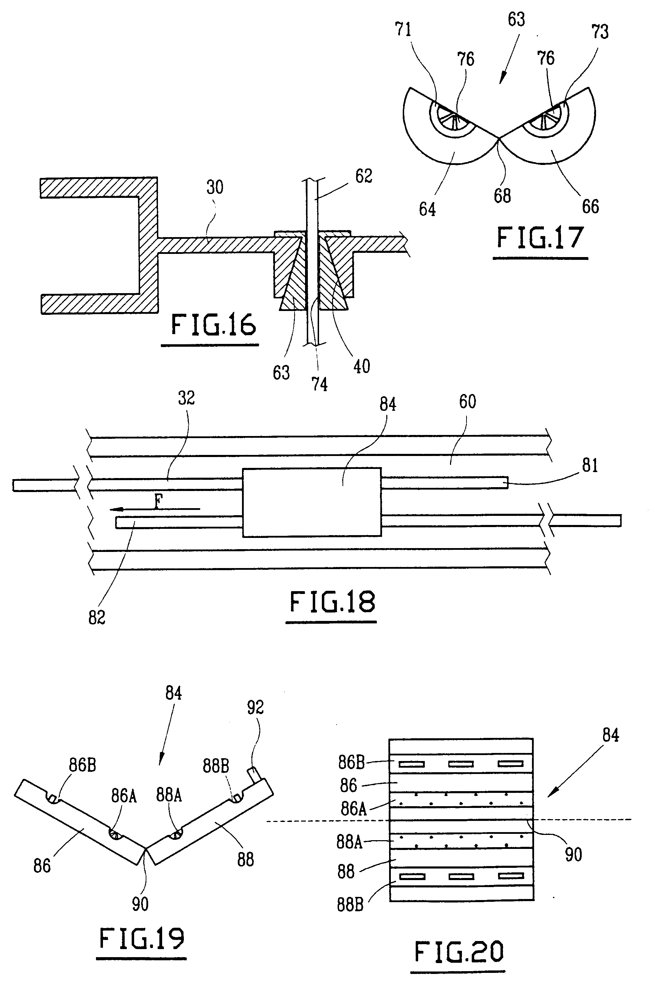

Sur la figure 15, on a représenté uniquement la jante 42, celle-ci étant munie de saillie radialement extérieure constituant des dents 80 régulièrement espacées, auquel cas l'élément complémentaire de serrage peut être constitué d'un élément du type courroie crantée.

Sur les figures 16 et 17, on a représenté un mode de réalisation préféré de fixation d'un élément formant plateau 30 selon la présente invention sur un filin 62.

Dans ce mode de réalisation, chacun des trous 40 de l'élément formant plateau 30 a une forme tronconique d'axe perpendiculaire au plan général du plateau.

Un filin 62 traversant le trou 40 est bloqué en position par un élément de blocage 63.

L'élément de blocage 63 est constitué de deux demi-coquilles 64 et 66 articulées le long d'une génératrice 68 (voir figure 17).

Les deux demi-coquilles 64 et 66, en position réunie, ont la forme d'un tronc de cône complémentaire aux trous tronconiques 40 du plateau 30. L'extrémité réduite des demi-coquilles comporte une demi-collerette 71 et 73 respectivement qui, en position assemblées délimitent une collerette circulaire d'encliquetage à travers le trou 40 comme représenté sur la figure 16.

En position assemblée à l'aide de moyens d'encliquetage non représentés, les deux demi-coquilles 64 et 66 délimitent une gorge 74 ayant un diamètre adapté à celui du filin 62, et munies de picots 76 destinés à bloquer en position le filin 62.

Un tel agencement permet d'utiliser indifféremment l'une ou l'autre des faces du plateau 30 pour supporter les huîtres, c'est à dire qu'il permet de retourner les lanternes japonaises, ce qui est une pratique courante.

Sur les figures 18 à 20, on a représenté un mode préféré d'élément séparé de serrage 32 coopérant avec une gorge annulaire 60 telle que représenté sur la figure 6.

L'élément de serrage 32 est constitué d'une corde ayant une longueur supérieure à la circonférence de l'élément formant plateau 30, comportant une première extrémité 81 et une seconde extrémité 82.

Après avoir agencé la corde 32 à l'extérieur du filet autour de l'élément formant plateau 30, une attache rapide 84 est installée de manière à réunir la première et la seconde extrémités 81, 82 respectivement. L'attache rapide 84 comme représenté sur les figures 19 et 20 est constituée de deux demi-coquilles 86, 88 de forme parallélépipèdique articulées le long d'un côté 90.

Les demi-coquilles sont munies de moyens d'encliquetage respectifs tels que le téton 92 représenté sur la figure 9 destiné à coopérer avec un trou de réception (non représenté) agencé dans la demi-coquille 86.

Chaque demi-coquille comporte des gorges semi-circulaires respectives 86A, 86B, 88A, 88B.

Les gorges semi-circulaires 86A et 88A coopèrent pour délimiter une gorge circulaire dans la position réunie ou active des demi-coquilles 86 et 88.

De même les gorges semi-circulaires 86B et 88B définissent en position active une gorge circulaire.

Dans les gorges semi-circulaires 86A et 88A sont agencés des picots destinés en position active à pénétrer à l'intérieur par exemple de la première extrémité 81 de la corde 32 pour bloquer celle-ci en position.

Les gorges 86B et 88B comportent des languettes habituelles agencées de telle sorte qu'en position active la seconde extrémité 82 de la corde 32 puisse coulisser à l'intérieur de la gorge formée des gorges semi-circulaires 86B et 88B uniquement dans la direction de serrage de la corde 32 dans la gorge annulaire 60 indiquée par la flèche F sur la figure 18, alors que cette seconde extrémité 82 est empêchée de coulisser dans la direction contraire.

Pour installer la corde 32, on entoure de manière lâche le filet à l'aide de la corde 32, de manière à ce que la première extrémité 81 et la seconde extrémité 82 se chevauchent. Ensuite on positionne l'attache rapide 84 de manière telle que la première extrémité 81 soit située dans l'une des gorges semi-circulaires 86A ou 88A, et que la seconde extrémité 82 de la corde soit agencée à l'intérieur de la gorge semi-circulaire 86B ou 88B associée, puis l'on réunit les deux demi-coquilles en position active.

Ensuite, en tirant sur la seconde extrémité 82 de la corde, on réduit le diamètre du cercle formé par celle-ci jusqu'à ce que la corde rentre dans la gorge annulaire 60 et l'on poursuit cette traction jusqu'à ce que l'attache rapide 84 soit située également dans la gorge annulaire 60 et que la force de serrage exercée par la corde 32 soit suffisante.

En variante, non représentée, les gorges semi-circulaires 86A et 88A ainsi que les gorges semi-circulaires 86B et 88B comportent toutes des languettes agencées pour qu'en position active la corde puisse coulisser dans deux directions opposées, dans un sens uniquement, dans les gorges formées par les gorges semi-circulaires 86A, 88A et 86B, 88B respectivement.

Dans un tel cas, après utilisation de la corde à l'extérieur du filet et autour de la cavité annulaire 60, il suffit d'installer les extrémités de la corde dans les gorges de l'attache, de rendre cette dernière active et de tirer dans des directions opposées sur les deux extrémités de la corde.

On fournit ainsi un ensemble formant plateau pour lanterne japonaise comportant un élément formant plateau agencé à l'intérieur du filet et un élément séparé de serrage du filet, agencé à l'extérieur du filet, autour de la jante de l'élément formant plateau.

Un tel ensemble permet de positionner facilement l'élément formant plateau dans une position horizontale et de serrer en position le filet sur la périphérie de l'élément formant plateau.

L'élément séparé de serrage ayant une surface extérieure pratiquement lisse n'accrochera pas le filet d'une lanterne adjacente et celles-ci peuvent être plus proches l'une de l'autre que dans la technique antérieure, ce qui accroît le rendement.

L'élément formant plateau pourra être réalisé sous forme de plusieurs éléments par exemple des secteurs angulaires.

## Revendications

1. Dispositif d'élevage de mollusques, notamment d'huîtres, comportant au moins un élément formant plateau (30) de support desdits mollusques et disposé à l'intérieur d'un filet (24) ayant une forme de tube et destiné a être suspendu à une haussière amarrée en mer, caractérisé en ce que l'élément formant plateau (30) comporte à sa périphérie un rebord (42) s'étendant de manière générale perpendiculairement au plan du plateau, et en ce qu'il comporte un élément séparé (32) de serrage du filet contre le rebord (42).

2. Dispositif selon la revendication 1, caractérisé en ce que le rebord (42) s'étend de part et d'autre du plan du plateau.

3. Dispositif selon la revendication 1, caractérisé en ce que le rebord (42) s'étend d'un côté du plan du plateau.

4. Dispositif selon l'une quelconque des revendications 1 à 3, caractérisé en ce que le plateau (30) est circulaire et le rebord (42) a une face radialement extérieure cylindrique, l'élément (32) de serrage étant un élément annulaire plat.

5. Dispositif selon l'une quelconque des revendications 1 à 3, caractérisé en ce que le plateau (30) est circulaire et le rebord (42) a une face radialement extérieure délimitant une cavité annulaire (60), l'élément de serrage (32) ayant une forme complémentaire de ladite cavité.

6. Dispositif selon l'une quelconque des revendications 1 à 3, caractérisé en ce que le plateau (30) est circulaire et le rebord (42) a une face radialement extérieure comportant une partie en relief, l'élément de serrage (32) ayant une forme complémentaire.

7. Dispositif selon l'une quelconque des revendications 1 à 6, caractérisé en ce que la partie centrale (36) du plateau est ajourée.

8. Dispositif selon la revendication 5, caractérisé en ce que l'élément séparé est constitué d'une corde (32) serrant le filet à l'intérieur de la cavité annulaire (60), les extrémités (81, 82) de la corde étant réunies par une attache rapide (84) reçue à l'intérieur de la cavité annulaire.

9. Dispositif selon la revendication 8, caractérisé en ce que l'attache rapide est constituée de deux demi-coquilles articulées (86, 88) ayant en position active réunie une forme extérieure complémentaire de la cavité annulaire (60) et délimitant deux gorges parallèles dont une première (86A, 88A) comporte des éléments de blocage d'une première extrémité (81) de la corde, l'autre gorge (86B, 88B) comportant des éléments permettant à la seconde extrémité (82) de la corde de coulisser dans la gorge uniquement dans la direction de serrage de corde dans la cavité annulaire, les coquilles comportant des moyens d'encliquetage mutuel en position active.

10. Dispositif selon la revendication 8, caractérisé en ce que l'attache rapide est constituée de deux demi-coquilles articulées (86, 88) ayant une position active réunie une forme extérieure complémentaire de la cavité annulaire (60) et délimitant deux gorges parallèles comportant chacune des éléments permettant aux extrémités de la corde de coulisser dans la gorge associée dans une direction uniquement, les directions de coulissement dans les deux gorges étant opposées l'une à l'autre.

11. Dispositif selon la revendication 1, l'élément formant plateau ayant un bord annulaire muni de trous (40) de fixation sur un filin respectif (62), caractérisé en ce qu'il comporte des éléments de blocage (63) du filin agencés dans chacun des trous (40) respectifs.

12. Dispositif selon la revendication 11, caractérisé en ce que les trous de fixation (40) ont un profil tronconique d'axe perpendiculaire au plateau, l'élément de blocage (63) associé étant constitué de deux demi-coquilles (64, 66) articulées qui, en position réunie, forment un tronc de cône complémentaire des trous (40), la partie d'extrémité rétrécie des coquilles définissant en position active une collerette (71,73) d'encliquetage à travers le trou associé, les coquilles délimitant une gorge axiale (74) de diamètre adapté au filin (62) et munie de picots (76) de blocage de ce dernier.

## Claims

1. Apparatus for rearing molluscs, especially oysters, comprising at least one element forming a support plate (30) for said molluscs and arranged inside a net (24) which is tube shaped and intended to be suspended from a hawser anchored at sea, characterised in that the plate element (30) has at its periphery a flange (42) extending generally perpendicularly to the plane of the plate, and in that it comprises a separate element (32) for clamping the net against the flange (42).

2. Apparatus according to claim 1, characterised in that the flange (42) extends on each side of the plane of the plate.

3. Apparatus according to claim 1, characterised in that the flange (42) extends on one side of the plane of the plate.

4. Apparatus according to any one of claims 1 to 3, characterised in that the plate (30) is circular and the flange (42) has a cylindrical radially outer surface, the clamping element (32) being a flat annular element.

5. Apparatus according to any one of claims 1 to 3, characterised in that the plate (30) is circular and the flange (42) has a radially outer surface defining an annular cavity (60), the clamping element (32) being complementary in shape to said cavity.

6. Apparatus according to any one of claims 1 to 3, characterised in that the plate (30) is circular and the flange (42) has a radially outer surface comprising a part in relief, the clamping element (32) being of complementary shape.

7. Apparatus according to any one of claims 1 to 6, characterised in that the central part (36) of the plate is perforated.

8. Apparatus according to claim 5, characterised in that the separate element consists of a cord (32) securing the net to the interior of the annular cavity (60), the ends (81, 82) of the cord being joined by a quick-acting coupling (84) accommodated inside said annular cavity.

9. Apparatus according to claim 8, characterised in that the quick-acting coupling consists of two articulated half-shells (86, 88) which, in their assembled active position, have an outer shape complementary to the annular cavity (60) and which define two parallel grooves, a first (86A, 88A) of which comprises elements for securing a first end (81) of the cord in place, the other groove (86B, 88B) comprising elements which allow the other end (82) of the cord to slide within the groove only in the direction of tightening of the cord in the annular cavity, the shells comprising means for mutual snap-fitting in the active position.

10. Apparatus according to claim 8, characterised in that the quick-acting coupling consists of two articulated half-shells (86, 88) which, in the assembled active position, have an outer shape complementary to the annular cavity (60) and defining two parallel grooves each of which comprises elements allowing the ends of the cord to slide within the associated groove in only one direction, the directions of sliding in the two grooves being opposite to each other.

11. Apparatus according to claim 1, the plate element having an annular rim provided with holes (40) for attachment to a respective rope (62), characterised in that it comprises elements (63) for securing the rope in place which are provided in each of the respective holes (40).

12. Apparatus according to claim 11, characterised in that the attachment holes (40) are frustum-shaped in profile, the axis thereof being perpendicular to the plate, the associated securing element (63) consisting of two articulated half-shells (64, 66) which, in the assembled position, form a truncated cone which is complementary to the holes (40), the narrowed end portion of the shells in the active position defining a flange or collar (71, 73) for snap-fitting through the associated hole, the shells defining an axial groove (74) of suitable diameter for the rope (62) and provided with barbs or projections (76) for securing the rope in place.

## Patentansprüche

1. Vorrichtung zum Züchten von Muscheln, insbesondere von Austern, die mindestens ein einen Teller bildendes Element (30) zum Tragen der Muscheln aufweist, das im Inneren eines rohrförmigen Netzes (24) angeordnet ist, das dazu bestimmt ist, an einer im Meer festgemachten Trosse aufgehängt zu werden, dadurch gekennzeichnet, daß das einen Teller bildende Element (30) an seinem Umfang eine Umrandung (42) aufweist, die sich allgemein senkrecht zur Ebene des Tellers erstreckt, und daß sie ein getrenntes Element (32) zum Festklemmen des Netzes an der Umrandung (42) aufweist.

2. Vorrichtung nach Anspruch 1, dadurch gekennzeichnet, daß die Umrandung (42) sich zu beiden Seiten der Ebene des Tellers erstreckt.

3. Vorrichtung nach Anspruch 1, dadurch gekennzeichnet, daß die Umrandung (42) sich auf einer Seite der Ebene des Tellers erstreckt.

4. Vorrichtung nach einem der Ansprüche 1 bis 3, dadurch gekennzeichnet, daß der Teller (30) kreisförmig ist und die radial äußere Seite der Umrandung (42) zylindrisch ist, wobei das Klemmelement (32) ein flaches ringförmiges Element ist.

5. Vorrichtung nach einem der Ansprüche 1 bis 3, dadurch gekennzeichnet, daß der Teller (30) kreisförmig ist und die radial äußere Seite der Umrandung (42) einen ringförmigen Hohlraum (60) abgrenzt, wobei das Klemmelement (32) eine diesen Hohlraum ergänzende Form hat.

6. Vorrichtung nach einem der Ansprüche 1 bis 3, dadurch gekennzeichnet, daß der Teller (30) kreisförmig ist und die radial äußere Seite der Umrandung (42) einen vorstehenden Teil aufweist, wobei das Klemmelement (32) eine ergänzende Form hat.

7. Vorrichtung nach einem der Ansprüche 1 bis 6, dadurch gekennzeichnet, daß der mittlere Teil (36) des Tellers durchbrochen ist.

8. Vorrichtung nach Anspruch 5, dadurch gekennzeichnet, daß das getrennte Element aus einem Tau (32) besteht, das das Netz im Inneren des ringförmigen Hohlraums (60) festklemmt, wobei die Enden (81, 82) des Taus durch eine im Inneren des ringförmigen Hohlraums aufgenommene Schnellkupplung (84) miteinander verbunden sind.

9. Vorrichtung nach Anspruch 8, dadurch gekennzeichnet, daß die Schnellkupplung aus zwei aneinander angelenkten Schalenhälften (86, 88) besteht, die in der zusammengefügten aktiven Stellung eine den ringförmigen Hohlraum (60) ergänzende Außenform haben und zwei zueinander parallele Nuten abgrenzen, von denen eine erste (86A, 88A) Elemente zur Blockierung eines ersten Endes (81) des Taus aufweist, wobei die andere Nut (86B, 88B) Elemente aufweist, die ein Gleiten des zweiten Endes (82) des Taus in der Nut nur in der Richtung des Anzugs des Taus im ringförmigen Hohlraum gestatten, und die Schalen Einrichtungen zur gegenseitigen Einrastung in aktiver Stellung aufweisen.

10. Vorrichtung nach Anspruch 8, dadurch gekennzeichnet, daß die Schnellkupplung aus zwei aneinander angelenkten Schalenhälften (86, 88) besteht, die in zusammengefügter aktiver Stellung eine zum ringförmigen Hohlraum (60) ergänzende Außenform haben und zwei zueinander parallele Nuten abgrenzen, die jeweils Elemente aufweisen, die ein Gleiten der Enden des Taus in der zugeordneten Nut in nur einer Richtung gestatten, wobei die Gleitrichtungen in den beiden Nuten einander entgegengesetzt sind.

11. Vorrichtung nach Anspruch 1, bei der der ringförmige Rand des einen Teller bildenden Elements mit Löchern (40) zur Befestigung jeweils an einem Tau (62) versehen ist, dadurch gekennzeichnet, daß sie Elemente (63) zur Blockierung des Taus aufweist, die in jedem der Löcher (40) angeordnet sind.

12. Vorrichtung nach Anspruch 11, dadurch gekennzeichnet, daß die Befestigungslöcher (40) ein kegelstumpfförmiges Profil mit zum Teller senkrechter Achse aufweisen, wobei das zugeordnete Blockierelement (63) aus zwei aneinander angelenkten Schalenhälften (64, 66) besteht, die in zusammengefügter Stellung einen die Löcher (40) ergänzenden Kegelstumpf bilden, wobei der verjüngte Endbereich der Schalen in aktiver Stellung einen Flansch (71, 73) zum Einrasten hinter dem zugeordneten Loch bildet und die Schalen eine axiale Nut (74) mit einem an das Tau (62) angepaßten Durchmesser abgrenzen, die mit Spitzen (76) zur Blockierung des Taus versehen ist.
